Europäisches Patentamt

European Patent Office

Office européen des brevets

(11) Veröffentlichungsnummer: **0 021 052**
**B1**

(12) **EUROPÄISCHE PATENTSCHRIFT**

(45) Veröffentlichungstag der Patentschrift: **30.01.85**

(21) Anmeldenummer: **80102865.5**

(22) Anmeldetag: **22.05.80**

(51) Int. Cl.⁴: **A 01 K 39/01, A 23 K 1/18**

(54) **Blockartiger Vogelfutterkörper.**

(30) Priorität: **13.06.79 DE 2924002**

(43) Veröffentlichungstag der Anmeldung:
**07.01.81 Patentblatt 81/01**

(45) Bekanntmachung des Hinweises auf die
Patenterteilung:
**30.01.85 Patentblatt 85/05**

(84) Benannte Vertragsstaaten:
**AT BE CH FR GB LI NL SE**

(56) Entgegenhaltungen:
**CS-A- 136 719**
**DE-B-1 004 851**
**FR-E- 69 603**
**GB-A-1 165 775**
**US-A-1 843 864**
**US-A-3 230 902**
**US-A-3 293 039**
**US-A-3 657 423**

**CHEMICAL ABSTRACTS, Band 75, Nr. 17, 1971,**
**Seite 249, Nr. 47667m Columbus, Ohio, U.S.A.**

(73) Patentinhaber: **Merkl, Alfred**
**Fenitzerstrasse 27**
**D-8500 Nürnberg (DE)**

(72) Erfinder: **Merkl, Alfred**
**Fenitzerstrasse 27**
**D-8500 Nürnberg (DE)**

(74) Vertreter: **Wey, Hans-Heinrich, Dipl.-Ing.**
**Patentanwälte Müller-Börner Wey & Körner**
**Widenmayerstrasse 49**
**D-8000 München 22 (DE)**

### Beschreibung

Die Erfindung betrifft blockartige Vogelfutterkörper, bestehend aus vogelartspezifischen Körnern und Zusätzen, wie Vitaminen, Mineralien oder dergl., und einem Bindemittel gemäß den Patentansprüchen 1 bis 10.

Derartige Vogelfutterkörper sind in Form von Barren, Stäben oder Ringen bereits bekannt. Um die Bestandteile des Vogelfutterkörpers miteinander zu verbinden, verwendet man bisher unterschiedlichste Bindemittel, zumeist organische Substanzen, wie Dextrin, aus Mehl oder ähnlichen Stoffen bestehende Kleber oder auch tierische Fette, wie insbesondere Talg. Die vorbekannten Bindemittel für die Bestandteile derartiger Vogelfutterkörper haben wesentliche Nachteile, insbesondere dann, wenn sie infolge Feuchtigkeitsaufnahme relativ rasch einen Nährboden für Pilze und Bakterien bilden, was unerwünscht ist und nachteilige Folgen für die Gesundheit der Vögel hat. Auch entwickeln die fraglichen Bindemittel unter bestimmten Bedingungen durch Veränderungen unerwünschte Gerüche.

Andererseits ist es aus der CZ—A—136 719 bekannt, aus Grünfutter oder geeigneten verfütterbaren Abfallprodukten durch Hochdruckpressen oder Hochtemperaturtrocknen ein Futtermittel in der Weise herzustellen, daß man das Futtermittel mit Stärke und Calciumcarbonatpulver verknetet, wobei während des Knetens eine Natriumsilikatlösung zugefügt wird, bis ein gelartiges Calcium-Natrium-Doppelsilikat gebildet worden ist. Danach wirde diese Masse, die selbsttätig aushärtet, zu Briketts, Granalen usw. ausgeformt. Wesentlich ist bei diesem bekannten Verfahren, daß die Kombination der Mischungsbestandteile, d.h. Futtermittel, Calciumcarbonat, Stärke und Natriumsilikat, gewahrt ist. Andererseits sind aber auch beträchtliche Mengen an Calciumcarbonat sowie an Natriumsilikat erforderlich, um die gestellte Aufgabe zu lösen.

Dagegen liegt der Erfindung die Aufgabe zugrunde, die Bestandteile der in Betracht kommenden Vogelfutterkörper derart miteinander zu verbinden, daß einerseits ein guter und stabiler sowie dauerhafter Zusammenhalt der Körner gewährleistet ist, bis die von den Vögeln mit ihrem Schnabel einzeln von dem Körper abgepickt werden, so daß ein durch das Picken bedingter Zerfall des Vogelfutterkörpers nach Möglichkeit vermieden wird, denn von ihm abgefallene Körner werden, wenn sie am Boden liegen, von einer Reihe von Vögeln nicht mehr angenommen, so daß diese Körner dann als Verlust zu betrachten sind. Andererseits soll das auszuwählende Bindemittel derart beschaffen sein, daß durch klimatische Verhältnisse, insbesondere Feuchtigkeitseinflüsse, die Festigkeit des Vogelfutterkörpers weitgehend unbeeinträchtigt bleibt und weiterhin keine Fäulnis eintritt.

Zur Lösung dieser Aufgabe wird gemäß der Erfindung vorgeschlagen, einen Vogelfutterkörper der eingangs genannten Art dadurch herzustellen, daß man die vogelartspezifischen Körner und die Zusätze mit 6 bis 15%, bezogen auf das Gewicht der Mischung, eines Wasserglases mischt, dessen Dichte 37 bis 40 Grade Bé und dessen Viskosität 70 bis 150 mPas beträgt, wobei das Wasserglas die einzige Bindemittelkomponente ist, daß man die Mischung ausformt und das Wasserglas aushärtet. Die Verwendung eines derartigen Bindemittels hat den wesentlichen Vorteil, daß die so ausgebildeten Vogelfutterkörper eine für lange Zeitdauer gleichbleibend feste Bindung aufweisen und weiterhin die Körner ausreichend fest an ihm festgehalten werden, so daß sie zwar mit dem Schnabel abgepickt werden können, aber sich nicht von selbst oder durch minimale Krafteinwirkung beim Picken ablösen und damit verlustig gehen.

Das vorgeschlagene Bindemittel hat weiterhin den Vorteil, dem Tierkörper Substanzen zuzuführen, die er für seine Gesunderhaltung gleichfalls benötigt. Die Verwendung des vorgeschlagenen Bindemittels hat sich als vorteilhaft erwiesen, um auch Zusatzstoffe, wie insbesondere Mineralien und Spurenelemente sowie Vitamine, zu binden, ohne daß die Gefahr besteht, daß diese Stoffe in nennenswertem Ausmaß verlorengehen oder auch im Laufe der Zeit durch Zerfall oder sonstige Veränderungen unwirksam werden. Ein weiterer Vorteil dieses Bindemittels ist der, daß sich die Festigkeit der Einbindung der Körner in den Futterkörper in relativ einfacher Weise je nach der spezifischen Art der Vögel durch Verwendung einer vorbestimmten Menge des Bindemittels einstellen läßt.

Als Bindemittel werden je nach der Art der Vögel, für die das Futter bestimmt ist, und der gewünschten Festigkeit des Futtermittelkörpers, bezogen auf die Körnermischung, etwa 6 bis 15% Natron- und/oder Kaliwasserglas verwendet, welches vorzugsweise ein spezifisches Gewicht von 1,34 bis 1,38 hat. Ein für den fraglichen Zweck geeignetes Natronwasserglas besteht beispielsweise aus 8,2% $Na_2O$, 27,3% $SiO_2$ und 64,5% $H_2O$, wobei das Verhältnis $SiO_2$:$Na_2O$=3,3 beträgt.

Um den ernährungsphysiologischen Wert der Vogelfutterkörper noch zu erhöhen, werden der Mischung von Körnern und Spurenelementen und/oder Mineralien verschiedenster Art, insbesondere Phosphate und dgl., sowie Quarzkörner und/oder kleine Holzkohlepartikel, gegebenenfalls auch Kochsalz und bzw. oder andere geeignete Salze zugesetzt. .

Um die in Betracht kommenden Vogelfutterkörper in einer vogelgerechten Form und Lage den Vögeln darzureichen, haben diese eine bestimmte zweckentsprechende geometrische Gestalt, insbesondere die Form eines Barrens, Stabes, Zylinders, einer Kugel oder auch Ringes, und sind weiterhin mit einer Halterung versehen, damit der fragliche Vogelfutterkörper in jeweils optimaler Weise aufstell- oder aufhängbar ist, um den Vögeln das Futter bestmöglich anzubieten und darzureichen.

Einzelheiten und spezifische Merkmale der Vogelfutterkörper und ihrer Halterung gemäß der Erfindung gehen aus den Unteransprüchen und den in den Figuren 1 bis 8 der Zeichnung dargestellten und nachstehend im einzelnen näher beschriebenen bevorzugten Ausführungsbeispielen hervor. Es zeigen:

Fig. 1 eine Ansicht eines Vogelfutterkörpers in Form eines Quaders oder Barrens;

Fig. 2 einen Vogelfutterkörper in Stabform;

Fig. 3 einen Querschnitt durch eine auf einer ebenen Fläche aufstellbaren Halterung mit vertikalem Haltestab, auf welchen Vogelfutterbarren z.B. nach Fig. 1 aufsteckbar sind;

Fig. 4 eine Seitenansicht einer Halterung für den Vogelfutterbarren, ähnlich derjenigen nach Fig. 3;

Fig. 5 eine Halterung zur Befestigung eines Vogelfutterbarrens nach Fig. 1 an einer vertikalen Wand oder am Gitter eines Vogelkäfigs oder dgl.;

Fig. 6 eine Halterung für Vogelfutterbarren in einer weiteren Ausführungsform;

Fig. 7 eine Halterung für einen Vogelfutterkörper in Kugelform, und

Fig. 8 eine Halterung für Vogelfutterbarren in Gehäuseform.

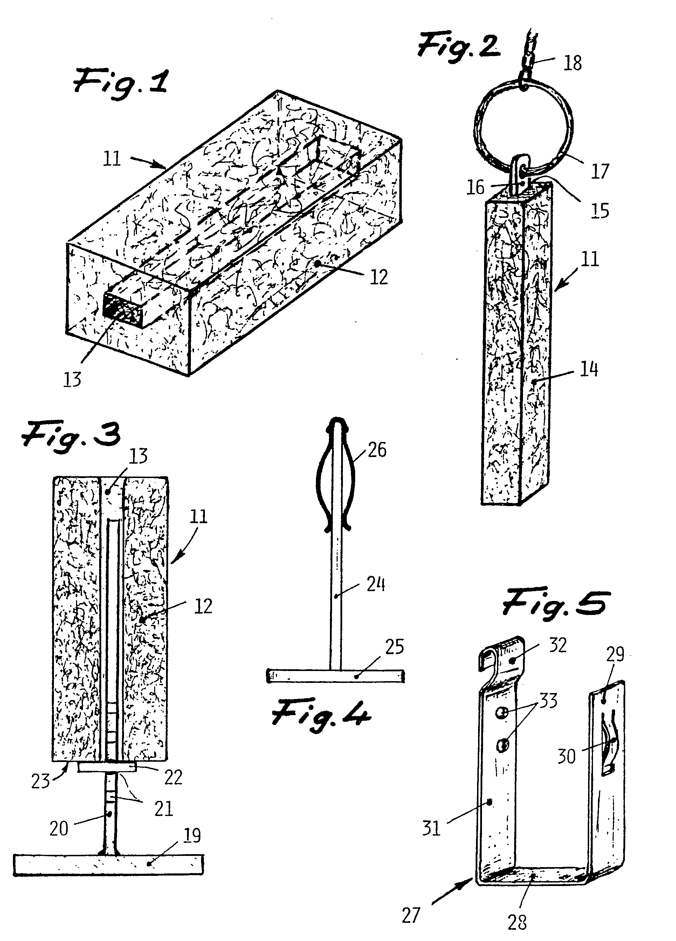

Wie Fig. 1 erkennen läßt, hat der erfindungsgemäße Vogelfutterkörper 11 die Form eines Quaders 12, in dessen Mitte sich ein durchgehender, in Längsrichtung erstreckender Hohlraum 13 befindet, der der Aufnahme eines Haltestabes dient, um den Futterbarren 12 vogelgerecht aufstellen oder aufhängen zu können.

Der Vogelfutterkörper 11 nach Fig. 2 hat die Form eines Stabes 14, in dessen zentralen Hohlraum 15 ein flacher Stab 16 angeordnet ist, der mit dem Futterstab 14 fest verbunden ist. In einer Bohrung am oberen Ende des Stabes 16 ist ein Ring 17 einer Kette 18 oder dgl. eingesetzt, um den Futterstab 14 aufhängen zu können. Vogelfutterstäbe dieser Art finden insbesondere für solche Vögel, wie z.B. Papageien, Verwendung, die ihr Futter mit ihren Krallen zu greifen gewohnt sind, um es dem Schnabel zuzuführen.

Um den Futterbarren 12 nach Fig. 1 in zweckentsprechender Weise aufzustellen oder aufzuhängen, damit seine Bestandteile von ihm in der für jede Vogelart optimalen Lage abpickbar sind, finden Halterungen nach den Figuren 3 bis 8 Anwendung.

Die Halterung nach Fig. 3 besteht aus einer Grundplatte 19, auf der ein aufrechter Stab 20 befestigt ist, auf welchen die mit einem Hohlraum 13 versehenen Vogelfutterbarren 12 oder ähnlich ausgebildete Körper aufsteckbar sind. Damit die untere Stirnfläche des Barrens 12 nicht unter eine bestimmte Höhe sinkt, befinden sich in dem Stab 20 übereinander und im Abstand voneinander mehrere Bohrungen 21, in welche ein Stift 22 einsteckbar ist, auf dem dann der Futterbarren 12 mit seiner unteren Stirnfläche 23 aufliegt.

Da viele Vögel, wie die Erfahrung gelehrt hat, die Futterbarren 12 an ihrem unteren Ende abzupicken beginnen, insbesondere wenn sich dieses in einer bestimmten Höhe befindet, kann der Futtermittelbarren 12 längs seiner Haltestange 20 abwärtsgleiten, um mit seiner jeweiligen unteren Stirnfläche 23 auf dem Stift 22 aufzuliegen.

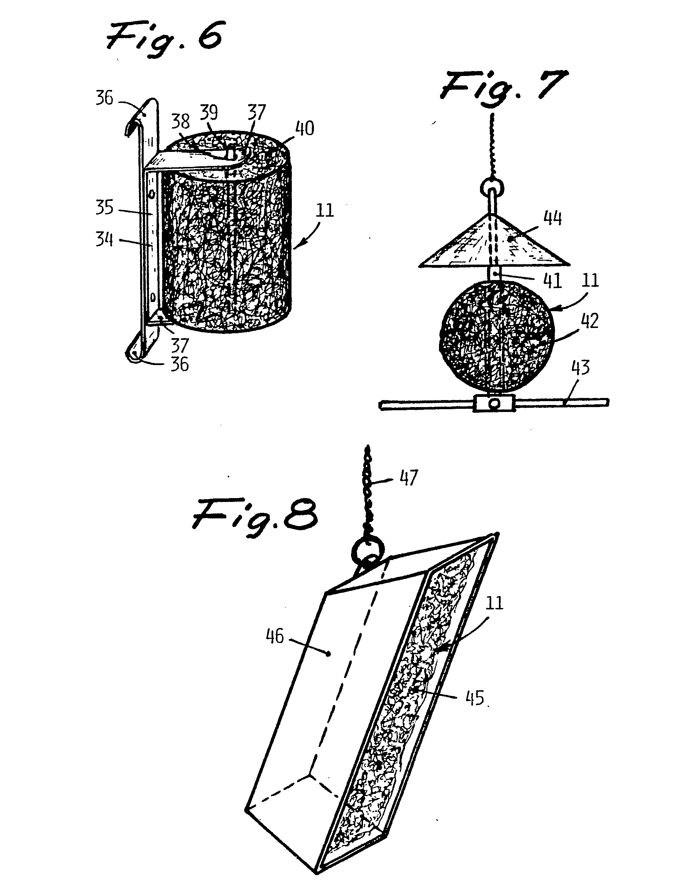

Für den Fall, daß der Wunsch besteht, die Vogelfutterbarren 12 in fester Lage am Haltestab 20 zu lagern, findet eine Halterung nach Fig. 4 Anwendung. Bei dieser befindet sich am Haltestab 24 der Grundplatte 25 wenigstens eine, gegebenenfalls zweischenkelige Blattfeder 26, die den Futterbarren 12 festklemmt, damit ein Wackeln beim Abpicken der Bestandteile vermieden bzw. verhindert oder zumindest weitgehend verringert wird, da sich manche Vögel dadurch bei der Futteraufnahme gestört fühlen.

Die Halterung nach Fig. 5 besteht aus einem L-förmigen Bügel 27, an dessen horizontalem Schenkel 28 sich ein Haltestab 29 mit einer Federzunge 30 befindet. Der Stab 29 besteht vorzugsweise mit dem Bügel 27 aus einem Stück. An das obere Ende des vertikalen Schenkels 31 des Bügels 27 ist ein Haken 32 angebogen, um die Halterung beispielsweise an der Innenseite eines Gitterkäfigs anhängen zu können. Um die Halterung an eine Wand anschrauben zu können, sind im Schenkel 31 Befestigungslöcher 33 vorgesehen.

Die Haltestäbe 20, 24, 29 können auch aus einem Federstahlband bestehen und so gebogen sein, daß die Futterbarren von diesen selbst festgeklemmt werden.

Eine weitere Halterung für Vogelfutterkörper 11 ist in Fig. 6 dargestellt. Sie besteht aus einem U-förmig gebogenen Stahlband 34, dessen vertikaler Schenkel 35 an eine Wand anschraubbar ist. An ihm kann aber auch ein mit Haken 36 versehener Bandstahlstreifen befestigt sein, um die Halterung an Gitterkäfigen anhängen zu können. Die horizontalen Schenkel 37 sind mit einer Bohrung 38 versehen, durch die die Enden des Haltestabes 39 des im vorliegenden Fall zylindrischen Barrens 40, der zwischen die Schenkel 37 eingesetzt bzw. eingespannt ist, hindurchtreten.

Bei der Halterung nach Fig. 7 befindet sich an dem Haltestab 41, auf den der z.B. kugelförmige Vogelfutterkörper 42 aufgesteckt ist, an seinem unteren Ende ein Querstab 43, auf welchem sich Vögel beim Abpicken der Körner niedersetzen können. Zum Zwecke des Schutzes der Futterkugel 42 kann auf den Haltestab 41 ein diese gegen Regen oder Schnee schützendes Dach 44 aufgesteckt sein.

Eine weitere Form des Vogelfutterkörpers mit seiner Halterung geht aus Fig. 8 hervor. Bei dieser ist der Futterbarren 45 in ein nach wenigstens einer Seite hin offenes Gehäuse 46 eingesetzt bzw. in ihm befestigt. Das Gehäuse kann in beliebiger Weise an einer Wand oder an einem Käfiggitter befestigbar oder mittels einer Kette 47 oder Schnur aufhängbar sein.

## Patentansprüche

1. Blockartiger Vogelfutterkörper, bestehend aus vogelartspezifischen Körnern und Zusätzen, wie Vitaminen, Mineralien oder dergl., und einem Bindemittel, dadurch gekennzeichnet, daß der Vogelfutterkörper hergestellt ist durch Vermischen der vogelartspezifischen Körner und der Zusätze mit 6 bis 15%, bezogen auf das Gewicht der Mischung, eines Wasserglases, dessen Dichte 37 bis 40 Grad Bé und dessen Viskosität 70 bis 150 mPas beträgt, als einziger Bindemittelkomponente, Ausformen der Mischung und Aushärten des Wasserglases.

2. Blockartiger Vogelfutterkörper nach Anspruch 1, dadurch gekennzeichnet, daß das Wasserglas ein Natronwasserglas ist.

3. Blockartiger Vogelfutterkörper nach Anspruch 1, dadurch gekennzeichnet, daß das Wasserglas ein Kaliwasserglas ist.

4. Blockartiger Vogelfutterkörper nach Anspruch 1, dadurch gekennzeichnet, daß das Wasserglas ein Gemisch aus Natron- und Kaliwasserglas ist.

5. Blockartiger Vogelfutterkörper nach Anspruch 1 bis 4, dadurch gekennzeichnet, daß als Halterung des Körpers (11) ein Stab (16, 20, 24, 29, 39) vorgesehen ist, der in einem Hohlraum (13, 15) des Körpers angeordnet und gegebenenfalls fest mit dem Körper verbunden ist.

6. Blockartiger Vogelfutterkörper nach Anspruch 5, dadurch gekennzeichnet, daß sich an dem Stab (24, 29) eine zwischen diesem und der Hohlraumwand liegende Klemmfeder (26, 30) befindet oder der Stab selbst als Klemmfeder ausgebildet ist.

7. Blockartiger Vogelfutterkörper nach Anspruch 5 oder 6, dadurch gekennzeichnet, daß der Stab (20, 24) an einer Grundplatte (19, 25) befestigt ist.

8. Blockartiger Vogelfutterkörper nach Anspruch 5 oder 6, dadurch gekennzeichnet, daß der Stab (29) an dem horizontalen Schenkel eines L-förmigen Bügels (27) befestigt ist oder mit diesem aus einem Stück besteht.

9. Blockartiger Vogelfutterkörper nach einem der Ansprüche 5 bis 8, dadurch gekennzeichnet, daß der Stab (20) mehrere Löcher (21) aufweist, in welche ein Stift (22) oder dgl. als höhenverstellbare Auflage für den Futterbarren (12) einsteckbar ist.

10. Blockartiger Vogelfutterkörper nach einem der Ansprüche 5 bis 9, dadurch gekennzeichnet, daß die Halterung aus einem U-förmigen Bügel (34) zwischen dessen freien Schenkel (37) der Futterbarren (40) eingesetzt bzw. eingespannt ist, und einem Haltestab (39) besteht, dessen Enden durch Bohrungen (38) in den freien Schenkeln (37) des Haltebügels (34) hindurchtreten.

## Revendications

1. Nourriture d'oiseaux en forme de bloc, constitué de graines spécifiques à l'espèce d'oiseau et d'additifs, comme des vitamines, des minéraux ou analogues, et un liant, caractérisée en ce que le bloc de nourriture d'oiseaux est préparé en mélangeant les graines spécifiques à l'espèce d'oiseau et les additifs avec 6 à 15%, rapportés au poids du mélange, d'un silicate, dont la densité est de 37 à 40 degrés Baumé et dont la viscosité est comprise entre 70 et 150 mPas, comme unique composant liant, en moulant le mélange et laissant durcir le silicate.

2. Nourriture d'oiseaux en forme de bloc selon la revendication 1, caractérisée en ce que le silicate est un silicate de soude.

3. Nourriture d'oiseaux en forme de bloc selon la revendication 1, caractérisée en ce que le silicate est un silicate de potasse.

4. Nourriture d'oiseaux en forme de bloc selon la revendication 1, caractérisée en ce que le silicate est un mélange de silicate de soude et de potasse.

5. Nourriture d'oiseaux en forme de bloc selon les revendications 1 à 4, caractérisée en ce qu'il est prévu comme support du bloc (11) une tige (16, 20, 24, 29, 39), disposée dans un espace vide (13, 15) du bloc qui, le cas échéant est solidement fixée au bloc.

6. Nourriture d'oiseaux en forme de bloc selon la revendication 5, caractérisée en ce qu'un ressort à lame (26, 30) est monté sur la tige (24, 29), entre celle-ci et la paroi de l'espace vide (26, 30) ou en ce que la tige elle-même a la forme d'un ressort à lame.

7. Nourriture d'oiseaux en forme de bloc selon la revendication 5 ou 6, caractérisée en ce que la tige (20, 24) est fixée sur une plaque de base (19, 25).

8. Nourriture d'oiseaux en forme de bloc selon la revendication 5 ou 6, caractérisée en ce que la tige (29) est fixée sur la branche horizontale d'un étrier en forme de L (27), ou est réalisée en une pièce avec celui-ci.

9. Nourriture d'oiseaux en forme de bloc selon l'une des revendications 5 à 8, caractérisée en ce que la tige (20) est percée de plusieurs trous (21), dans lesquels une cheville ou analogue est glissée, ladite cheville servant de base d'appui réglable en hauteur à la barre de nourriture (12).

10. Nourriture d'oiseaux en forme de bloc selon l'une des revendications 5 à 9, caractérisée en ce que le support est constitué d'un étrier en forme de U (34) entre les branches libres (37) duquel la barre de nourriture (40) est placée ou insérée, et d'un axe support (39) dont les extrémités passent dans les trous (38) ménagés dans les branches libres (37) de l'étrier support.

**Claims**

1. A block-shaped bird food consisting of seeds and additives such as vitamins, minerals and the like for specific species of birds, and a binder, characterized in that the bird food body is produced by mixing the seeds and additives for specific species of birds with 6 to 15%, based on the weight of the mixture, of water glass having a density of 37 to 40 degrees Bé and a viscosity of 70 to 150 mPas, as the only binder component, by shaping the mixture and hardening the water glass.

2. A block-shaped bird food according to claim 1, characterized in that the water glass is soda water glass.

3. A block-shaped bird food according to claim 1, characterized in that the water glass is potash water glass.

4. A block-shaped bird food according to claim 1, characterized in that the water glass is a mixture of soda water glass and potash water glass.

5. A block-shaped bird food body according to claims 1 to 4, characterized in that a rod (16, 20, 24, 29, 39) arranged in a hollow space (13, 15) of the body (11) and, if applicable, firmly connected with said body, is provided as the holder of the body.

6. A block-shaped bird food according to claim 5, characterized in that a clamping spring (26, 30) is provided on the rod (24, 29) and is positioned between said rod and the wall of the hollow space, or the rod itself is designed as a clamping spring.

7. A block-shaped bird food according to claim 5 or 6, characterized in that the rod (20, 24) is fixed to a base plate (19, 25).

8. A block-shaped bird food according to claim 5 or 6, characterized in that the rod (29) is fixed to the horizontal arm of an L-shaped bracket (27) or is integral therewith.

9. A block-shaped bird food according to one of claims 5 to 8, characterized in that the rod (20) has several holes (21) into which a pin (22) or the like can be inserted as a vertically adjustable support for the food bar (12).

10. A block-shaped bird food according to one of claims 5 to 9, characterized in that the holder comprises a U-shaped bracket (34), with the food bar (40) being inserted or clamped between the free arms (37) thereof, and a holding rod (39) with the ends thereof projecting through bores (38) in the free arms (37) of the retaining bracket (34).

Fig.1

Fig.2

Fig.3

Fig.4

Fig.5

Fig. 6

Fig. 7

Fig. 8